# EUROPÄISCHE PATENTANMELDUNG

(11) **EP 3 202 718 A1**
(43) Veröffentlichungstag der Anmeldung: **09.08.2017**
(21) Anmeldenummer: 16153852.5
(22) Anmeldetag: 02.02.2016
(51) Int. Cl.: C02F 1/28, B01J 20/26, B01J 20/28, B01D 53/84, C02F 3/10, C02F 3/34

(54) **VERFAHREN ZUM ABBAU ZUMINDEST EINES KOHLENSTOFFHALTIGEN SCHADSTOFFES, ABBAUMITTEL UND REINIGUNGSVORRICHTUNG**

(71) Anmelder: Margraf-Gerdau, Vera, 45721 Haltern am See (DE); Rathmann, Michael, 21614 Buxtehude (DE)
(72) Erfinder: Weissenborn, Martin, 70173 Stuttgart (DE); Fischmann, Heinz, 53121 Bonn (DE); Gerdau, Herbert, 45721 Haltern am See (DE)
(74) Vertreter: Rohmann, Michael

(57) **Zusammenfassung**

Verfahren zum Abbau zumindest eines organischen kohlenstoffhaltigen Schadstoffes, wobei der Schadstoff an zumindest einem Adsorptionsmittel adsorbiert wird. Das Adsorptionsmittel weist zumindest einen Kautschuk und zumindest einen damit gemischten feinteiligen bzw. pulverförmigen Füllstoff auf. In bzw. an dem Adsorptionsmittel werden Mikroorganismen aufgenommen, mit denen die Schadstoffe abgebaut werden.

## Beschreibung

Die Erfindung betrifft ein Verfahren zum Abbau zumindest eines kohlenstoffhaltigen Schadstoffes, insbesondere zumindest eines organischen kohlenstoffhaltigen Schadstoffes, wobei der Schadstoff an zumindest einem Adsorptionsmittel adsorbiert wird. Die Erfindung bezieht sich weiterhin auf ein Abbaumittel zum Abbau zumindest eines kohlenstoffhaltigen Schadstoffes sowie auf eine Reinigungsvorrichtung für den Abbau zumindest eines kohlenstoffhaltigen Schadstoffes. - Mit organischen kohlenstoffhaltigen Schadstoffen sind im Rahmen der Erfindung beispielsweise im industriellen Betrieb anfallende Schadstoffe wie Methan, Styrol, Dioxine und dergleichen gemeint. Grundsätzlich können im Rahmen der Erfindung aber alle Arten von Schadstoffen absorbiert und abgebaut werden. Dabei handelt es sich vor allem um Schadstoffe in gasförmiger oder flüssiger Form. Die Schadstoffe können insbesondere in Abwasser oder Abluft enthalten sein. - Abbau der Schadstoffe meint im Rahmen der Erfindung insbesondere, dass die Schadstoffe nicht nur aufgefangen, beispielsweise adsorbiert werden, sondern zusätzlich auch abgebaut und insbesondere chemisch zersetzt werden.

Aus der Praxis sind verschiedene Verfahren zum Auffangen bzw. Fixieren von Schadstoffen und vor allem auch Verfahren zur Adsorption von Schadstoffen an Adsorptionsmitteln wie Aktivkohle oder dergleichen bekannt. Bei diesen bekannten Verfahren ist häufig ein relativ vollständiges Auffangen des Schadstoffes möglich. Nichtsdestoweniger muss das Adsorptionsmittel nach relativ kurzen Adsorptionszeiten verhältnismäßig aufwendig entsorgt oder reaktiviert werden. - Andererseits sind auch Verfahren zum Abbau bzw. zur chemischen Zersetzung von Schadstoffen bekannt. Diese bekannten Verfahren zeichnen sich jedoch oftmals durch den Nachteil aus, dass die Schadstoffe nicht so vollständig wie gewünscht erfasst und somit abgebaut bzw. zersetzt werden können. Maßnahmen zur möglichst vollständigen Zersetzung der Schadstoffe sind komplex und aufwendig.

Demgegenüber liegt der Erfindung das technische Problem zugrunde, ein Verfahren der eingangs genannten Art anzugeben, bei dem die vorstehend genannten Nachteile vermieden werden können und mit dem Schadstoffe zum einen sehr effektiv und vollständig aufgefangen werden können und zum anderen ebenso effektiv und vollständig abgebaut bzw. zersetzt werden können. Fernerhin liegt der Erfindung das technische Problem zugrunde, ein entsprechendes Abbaumittel sowie eine Reinigungsvorrichtung anzugeben.

Zur Lösung dieses technischen Problems lehrt die Erfindung ein Verfahren zum Abbau zumindest eines kohlenstoffhaltigen Schadstoffes, insbesondere zumindest eines organischen kohlenstoffhaltigen Schadstoffes, wobei der Schadstoff an zumindest einem Adsorptionsmittel adsorbiert wird, wobei das Adsorptionsmittel zumindest einen Kautschuk - insbesondere in fein verteilter bzw. fein zerkleinerter Form - und zumindest einen damit gemischten - insbesondere feinteiligen bzw. pulverförmigen - Füllstoff aufweist und wobei in bzw. an dem Adsorptionsmittel Mikroorganismen aufgenommen sind bzw. werden, mit denen die adsorbierten Schadstoffe abgebaut werden. Mit kohlenstoffhaltigen Schadstoffen sind im Rahmen der Erfindung insbesondere organische Abfallstoffe bzw. Bioabfälle gemeint. Dabei kann es sich um gasförmige und/oder flüssige und/oder feste organische kohlenstoffhaltige Schadstoffe handeln. Es liegt im Rahmen der Erfindung, dass der abzubauende Schadstoff bzw. dass die abzubauenden Schadstoffe in einem Stoffgemisch mit anderen Stoffen bzw. Schadstoffen vorliegen, insbesondere in einem gasförmigen und/oder flüssigen Stoffgemisch. Das erfindungsgemäße Verfahren eignet sich insbesondere zur Reinigung von Abluft und/oder Abwasser. - Die erfindungsgemäßen Maßnahmen stellen insbesondere einen effektiveren und funktionsfähigeren Ersatz für die bislang aus der Praxis bekannten Biofilter bzw. Biofiltermaßnahmen dar.

Im Rahmen des erfindungsgemäßen Verfahrens wird nach einer bevorzugten Ausführungsform zunächst das Adsorptionsmittel mit den Mikroorganismen beladen bzw. bevölkert und im Anschluss daran wird der Schadstoff bzw. ein schadstoffhaltiges Stoffgemisch über bzw. durch das Adsorptionsmittel geleitet, so dass der Schadstoff an dem Adsorptionsmittel adsorbiert wird und von den Mikroorganismen abgebaut wird. Zweckmäßigerweise werden sowohl die Mikroorganismen als auch der Schadstoff bzw. die Schadstoffe an dem Adsorptionsmittel adsorbiert und nach bevorzugter Ausführungsform der Erfindung auch absorbiert. Dann wirkt das Adsorptionsmittel zugleich als Absorptionsmittel und kann somit unter den Oberbegriff Sorptionsmittel subsumiert werden. - Nach einer weiteren Ausführungsform können auch zunächst der Schadstoff bzw. die Schadstoffe und die Mikroorganismen gemischt werden und erst im Anschluss daran an dem Adsorptionsmittel adsorbiert und vorzugsweise auch absorbiert werden.

Nach sehr empfohlener Ausführungsform des erfindungsgemäßen Verfahrens wird das Adsorptionsmittel mit der Maßgabe mit den Mikroorganismen beladen bzw. bevölkert, dass das Aggregat bzw. die Gesamtheit aus Adsorptionsmittel und Mikroorganismen 2 bis 50 Vol.-%, vorzugsweise 5 bis 45 Vol.-% und bevorzugt 10 bis 40 Vol.-% Mikroorganismen enthält. Besonders bevorzugt enthält das Aggregat bzw. die Gesamtheit aus Adsorptionsmittel und Mikroorganismen 15 bis 30 Vol.-%, besonders bevorzugt 15 bis 25 Vol.-% Mikroorganismen.

Es liegt im Rahmen der Erfindung, dass bei dem erfindungsgemäßen Verfahren die Mikroorganismen spezifisch ausgewählt werden, so dass sie die jeweils zu entfernenden Schadstoffe abbauen bzw. zersetzen können. Insoweit kann bei einer Mischung von Schadstoffen auch eine entsprechende Mischung von Mikroorganismen eingesetzt werden, die jeweils die Schadstoffe spezifisch abbauen können. Wie oben bereits angedeutet, liegt es weiterhin im Rahmen der Erfindung, dass das bei dem erfindungsgemäßen Verfahren eingesetzte Adsorptionsmittel allgemeiner als Sorptionsmittel wirkt und somit sowohl eine Adsorption des Schadstoffes als auch eine Absorption bzw. eine Aufnahme des Schadstoffes zulässt. Dazu weist das erfindungsgemäß eingesetzte Adsorptionsmittel vorzugsweise entsprechende - weiter unten noch näher spezifizierte - Poren auf. - Gemäß besonders bevorzugter Ausführungsform des erfindungsgemäßen Verfahrens wird ein zu entfernender bzw. abzubauender Schadstoff mit dem erfindungsgemäß eingesetzten Adsorptionsmittel sowohl adsorbiert als auch absorbiert und der Schadstoff wird dann mit in bzw. an dem Adsorptionsmittel aufgenommenen Mikroorganismen abgebaut bzw. zersetzt. Es liegt im Rahmen der Erfindung, dass auch die Mikroorganismen an dem Adsorptionsmittel adsorbiert und in dem Adsorptionsmittel (bzw. Sorptionsmittel) absorbiert werden.

Weiterhin liegt es im Rahmen der Erfindung, dass mit dem erfindungsgemäßen Verfahren als organischer kohlenstoffhaltiger Schadstoff zumindest ein Schadstoff aus der Gruppe "aliphatischer Kohlenwasserstoff, aromatischer Kohlenwasserstoff, sauerstoffhaltiger Kohlenwasserstoff, schwefelhaltiger Kohlenwasserstoff, stickstoffhaltiger Kohlenwasserstoff, phosphorhaltiger Kohlenwasserstoff, halogenhaltiger Kohlenwasserstoff' abgebaut wird. - Gemäß besonders empfohlener Ausführungsform der Erfindung wird im Rahmen des erfindungsgemäßen Verfahrens als organischer kohlenstoffhaltiger Schadstoff zumindest ein Schadstoff aus der Gruppe "Alkan, Alken, Alkohol, Keton, Phenol, Amin, Styrol, Dioxin, Furan, Mercaptan, Naphthalin" abgebaut. Bei dem abzubauenden Schadstoff handelt es sich beispielsweise bzw. vorzugsweise um Methan, Ethan, Ethylen, Styrol, Aceton oder dergleichen Schadstoff.

Zweckmäßigerweise werden die Schadstoffe in gasförmiger und/oder flüssiger Form in Kontakt mit dem Adsorptionsmittel gebracht. Dabei können die Schadstoffe auch mittels eines gasförmigen Mediums bzw. Trägermediums und/oder mittels eines flüssigen Mediums bzw. Trägermediums in Kontakt mit dem Adsorptionsmittel gebracht werden. Gemäß einer besonders bevorzugten Ausführungsform des erfindungsgemäßen Verfahrens werden die Schadstoffe im gasförmigen Zustand mit dem Adsorptionsmittel in Kontakt gebracht bzw. über das Adsorptionsmittel geleitet. Grundsätzlich liegt es auch im Rahmen der Erfindung, dass die Schadstoffe in fester Form mit dem Adsorptionsmittel in Kontakt gebracht werden können.

Das im Rahmen der Erfindung eingesetzte Adsorptionsmittel kann zumindest einen Synthesekautschuk und/oder zumindest einen Naturkautschuk aufweisen. Nach besonders bevorzugter Ausführungsform des erfindungsgemäßen Verfahrens wird für das Adsorptionsmittel zumindest ein Kautschuk aus der Gruppe "Emulsions-Styrol-Butadien-Kautschuk (ESBR), Styrol-Butadien-Kautschuk (SBR), Naturkautschuk" eingesetzt. Besonders bevorzugt wird im Rahmen des erfindungsgemäßen Verfahrens ESBR als Kautschuk verwendet. Nach einer Ausführungsvariante des erfindungsgemäßen Verfahrens kann der Kautschuk zunächst in Form einer wässrigen Latex-Emulsion hergestellt werden, wobei vorzugsweise die Latex-Emulsion einen Feststoffanteil (Kautschuk) von 20 bis 60 Gew.-%, bevorzugt von 22 bis 60 Gew.-% und sehr bevorzugt von 23 bis 50 Gew.-% aufweist. Die Latex-Emulsion kann zumindest mit dem nachfolgend noch näher spezifizierten Füllstoff gemischt werden und daraus können Formteilchen, insbesondere Pellets geformt werden und im Rahmen des erfindungsgemäßen Verfahrens eingesetzt werden. Es liegt im Rahmen der Erfindung, dass die Formteilchen bzw. Pellets nach ihrer Formung getrocknet werden.

Gemäß sehr empfohlener Ausführungsform der Erfindung wird als Füllstoff des Adsorptionsmittels zumindest ein Ruß aus der Gruppe "Furnace-Ruß, Gas-Ruß, Flamm-Ruß" eingesetzt. Besonders bevorzugt ist im Rahmen des erfindungsgemäßen Verfahrens der Einsatz von Furnace-Ruß. Empfohlenermaßen wird als Füllstoff zumindest ein Ruß eingesetzt, der eine Jodadsorptionszahl von 80 mg/g bis 400 mg/g, bevorzugt von 100 mg/g bis 300 mg/g aufweist (gemessen nach ASTM D1510). Zweckmäßigerweise wird ein Füllstoff verwendet, insbesondere als Füllstoff zumindest ein Ruß verwendet, der eine BET - Oberfläche von 200 m²/g bis 900 m²/g, besonders bevorzugt von 200 m²/g bis 600 m²/g aufweist (gemessen nach DIN ISO 9277).

Gemäß besonders empfohlener Ausführungsform der Erfindung wird das Adsorptionsmittel im Rahmen des erfindungsgemäßen Verfahrens in fester Form eingesetzt und zwar vorzugsweise in Form von Pulver und/oder Pellets und/oder Granulat. Nach einer Ausführungsvariante der Erfindung können die Ausgangsstoffe des erfindungsgemäß eingesetzten Adsorptionsmittels - insbesondere der zumindest eine Kautschuk und der zumindest eine Füllstoff - in einem Extrusionsmischer oder in einem Paddle-Mischer gemischt werden und anschließend zu Formteilchen, vorzugsweise zu Pellets geformt werden. Die Formteilchen bzw. die Pellets können vorzugsweise nach ihrer Formung getrocknet werden. - Grundsätzlich liegt es im Rahmen der Erfindung, dass Adsorptionsmittel in Form einer Emulsion einzusetzen. Im Zuge dieser Ausführungsvariante kann der den Füllstoff enthaltende Kautschuk als Emulsion am Einsatzort aufgebracht bzw. aufgetragen werden. Nach einer zweckmäßigen Ausführungsform handelt es sich dabei um eine wässrige Emulsion, so dass die Emulsion dabei von dem den Füllstoff enthaltenden Kautschuk und Wasser gebildet wird, bzw. im Wesentlichen gebildet wird.

Gemäß empfohlener Ausführungsform der Erfindung wird der Abbau der adsorbierten Schadstoffe durch die Mikroorganismen bei einer Temperatur von 10°C bis 80°C, zweckmäßigerweise von 10°C bis 70°C, bevorzugt von 10°C bis 45°C und besonders bevorzugt von 10°C bis 35°C durchgeführt. Es liegt im Rahmen der Erfindung, dass auch die Adsorption bei den vorgenannten Temperaturen bzw. in den vorgenannten Temperaturbereichen stattfindet.

Es liegt im Rahmen der Erfindung, dass bei dem erfindungsgemäßen Verfahren heterotrophe, insbesondere chemo-organo-heterotrophe Mikroorganismen bzw. Bakterien für den Abbau der Schadstoffe eingesetzt werden. Es kann sich insbesondere um Mikroorganismen aus Kläranlagen oder vergleichbaren Quellen handeln.

Eine bevorzugte Ausführungsform des erfindungsgemäßen Verfahrens ist dadurch gekennzeichnet, dass für den Abbau der Schadstoffe zumindest eine Mikroorganismenart aus der Gruppe "Pseudomonas sp, Xanthomonas sp, Pseudomonas acidovorans CA28, Pseudomonas sp B13, Pseudomonas putida US2, Rhodococcus spp, Alcaligenes sp A 7-2, Pseudomonas sp NRRL B-12228, Streptomycetes spp, Xanthobacter autotrophicus, Candida parapsilosis, Flavobacterium sp, Arthrobacter sp ATCC 33790, Phanerochaete chrysosporium, Fusarium flocciferum, Methanogenic consortium, Fusarium flocciferum, Pseudomonas putida P8, Cryptococcus elinovii, Pimelobacter sp, Alcaligenes denitrificans, Paracoccus nitrificants", eingesetzt wird. Es liegt dabei im Rahmen der Erfindung, dass die verwendete Mikroorganismenart bzw. die zu verwendenden Mikroorganismenarten spezifisch im Hinblick auf den abzubauenden Schadstoff bzw. die abzubauenden Schadstoffe ausgewählt wird/werden. - Nach besonders empfohlener Ausführungsform des erfindungsgemäßen Verfahrens wird eine Mischung aus Mikroorganismen bzw. Mikroorganismenarten eingesetzt, insbesondere für den Abbau einer Mischung von Schadstoffen. Es liegt dabei ebenfalls im Rahmen der Erfindung, dass die Mischung von Mikroorganismen bzw. Mikroorganismenarten spezifisch im Hinblick auf die abzubauenden Schadstoffe bzw. im Hinblick auf die abzubauende Mischung von Schadstoffen ausgewählt wird.

Zweckmäßigerweise werden die Mikroorganismen bzw. wird eine Mischung von Mikroorganismen - vorzugsweise aus der obigen Aufzählung - in einer Mineralsalzlösung als Nährlösung angezüchtet. Es liegt im Rahmen der Erfindung, dass die Nährlösung zumindest einen Zusatzstoff aus der Gruppe "Magnesiumsulfat, Calciumchlorid, Biotin, Thiamin" enthält oder nach besonders bevorzugter Ausführungsform alle diese Zusatzstoffe enthält. Fernerhin liegt es im Rahmen der Erfindung, dass der Nährlösung zumindest geringe Mengen zumindest einer Zusatzsubstanz aus der Gruppe "Eisen(III)-chlorid, Zinkchlorid, Kupfer(II)-chlorid, Kobaltchlorid, Borsäure, Mangan(II)-chlorid" zugesetzt werden.

Vorzugsweise wird den Mikroorganismen bzw. der Nährlösung als Kohlenstoffquelle bzw. als einzige Kohlenstoffquelle der abzubauende Schadstoff zugesetzt bzw. werden hierzu die abzubauenden Schadstoffe zugesetzt. Dabei kann es sich auch um ein Stoffgemisch handeln, das den abzubauenden Schadstoff bzw. die abzubauenden Schadstoffe enthält. Bevorzugt erfolgt dieser Zusatz des Schadstoffes oder der Schadstoffe in gasförmiger und/oder in fester Form. - Zweckmäßigerweise werden die Mikroorganismen bzw. die Kulturen mit dem Schadstoff bzw. mit den Schadstoffen bei Raumtemperatur - beispielsweise bei 21°C - inkubiert und man lässt sie vorzugsweise/beispielsweise bis zu einer optischen Dichte bei 600 nm (OD₆₀₀) von 0,5 wachsen. Empfohlenermaßen wird im Anschluss daran das Adsorptionsmittel zugesetzt - zweckmäßigerweise für 5 bis 15 Stunden, beispielsweise für 10 Stunden zugesetzt - damit die die Schadstoffe abbauenden Mikroorganismen auf dem Adsorptionsmittel immobilisieren bzw. adsorbieren.

Gegenstand der Erfindung ist weiterhin ein Abbaumittel zum Abbau zumindest eines kohlenstoffhaltigen Schadstoffes bzw. zumindest eines organischen kohlenstoffhaltigen Schadstoffes, wobei zumindest ein Adsorptionsmittel zur Adsorption des Schadstoffes vorhanden ist, wobei das Adsorptionsmittel eine Mischung aus zumindest einem Kautschuk - insbesondere in fein verteilter bzw. fein zerkleinerter Form - und aus zumindest einem Füllstoff - insbesondere in feinteiliger bzw. pulverförmiger Form - aufweist und wobei in bzw. an dem Adsorptionsmittel Mikroorganismen aufgenommen sind, mit denen die von dem Adsorptionsmittel adsorbierten Schadstoffe abbaubar sind. Eine besonders bevorzugte Ausführungsform der Erfindung ist dadurch gekennzeichnet, dass das Adsorptionsmittel Poren in Form von Mikroporen mit einem Durchmesser d < 2 nm, Mesoporen mit einem Durchmesser d von 2 nm bis 50 nm und Makroporen mit einem Durchmesser d > 50 nm aufweist. Durchmesser d meint dabei vorzugsweise den mittleren Durchmesser bzw. die mittlere Öffnungsweite der Poren. Eine sehr empfohlene Ausführungsform der Erfindung zeichnet sich dadurch aus, dass der Porenanteil der Mikroporen 0 % bis 10% und bevorzugt 3 % bis 7 % beträgt. Es empfiehlt sich, dass der Porenanteil der Mesoporen 70 % bis 100 %, bevorzugt 75 % bis 95 % und sehr bevorzugt 80 % bis 90 % beträgt. Vorzugsweise beträgt der Porenanteil der Makroporen 0 % bis 20 %, bevorzugt 5 % bis 15 %. Zweckmäßigerweise addiert sich der Anteil der Mikroporen, der Mesoporen und der Makroporen zu 100 % Porenanteil.

Empfohlenermaßen beträgt der Anteil des Füllstoffes in dem Adsorptionsmittel 40 bis 95 Gew.-%, vorzugsweise 50 bis 95 Gew.-% und bevorzugt 60 bis 95 Gew.-%. - Es wurde bereits darauf hingewiesen, dass nach bewährter Ausführungsform der Erfindung als Füllstoff zumindest ein Füllstoff aus der Gruppe "Furnace-Ruß, Gas-Ruß, Flamm-Ruß" eingesetzt wird. Gemäß einer Ausführungsvariante der Erfindung könnte alternativ oder zusätzlich auch Aktivkohle und/oder Kieselsäure als Füllstoff des Adsorptionsmittels eingesetzt werden.

Eine besonders empfohlene Ausführungsform des erfindungsgemäßen Abbaumittels ist dadurch gekennzeichnet, dass das Adsorptionsmittel in fester Form vorliegt und zwar vorzugsweise in Gestalt von Formteilchen - insbesondere in Form von Pellets und/oder Granulat vorliegt. Es empfiehlt sich dabei, dass der maximale Durchmesser der Formteilchen 1 mm bis 6 mm, vorzugsweise 2 mm bis 5 mm und sehr bevorzugt 3 mm bis 4 mm beträgt. Wie weiter oben bereits dargelegt kann das Adsorptionsmittel im Rahmen der Erfindung auch in Pulverform eingesetzt werden. - Eine Ausführungsform der Erfindung zeichnet sich dadurch aus, dass die Formteilchen bzw. die Granulatpartikel und/oder Pellets und/oder das Pulver auf einen Trägermaterial aufgebracht wird, beispielsweise auf ein Vlies, eine Matte oder dergleichen. Die Formteilchen des erfindungsgemäß eingesetzten Adsorptionsmittels können beispielsweise auf eine klebende Oberfläche eines Trägermaterials aufgestreut werden und dann mit diesem Trägermaterial erfindungsgemäß eingesetzt werden. Grundsätzlich kann das erfindungsgemäße Abbaumittel bzw. das erfindungsgemäß eingesetzte Adsorptionsmittel auch in Filtergehäusen, Kartuschen oder dergleichen fixiert werden, die dann von dem Schadstoff bzw. von den Schadstoffen bzw. von dem schadstoffhaltigen Stoffgemisch durchströmt werden.

Eine bevorzugte Ausführungsform der Erfindung ist dadurch gekennzeichnet, dass beim Durchströmen des erfindungsgemäß eingesetzten Adsorptionsmittel - insbesondere beim gasförmigen Durchströmen - 10 mg/m³ bis 250 mg/m³, vorzugsweise 25 mg/m³ bis 200 mg/m³ und bevorzugt 50 mg/m³ bis 150 mg/m³ Schadstoff bzw. Schadstoffe adsorbiert und abgebaut werden.

Gegenstand der Erfindung ist fernerhin eine Reinigungsvorrichtung für den Abbau zumindest eines kohlenstoffhaltigen Schadstoffes bzw. organischen kohlenstoffhaltigen Schadstoffes, wobei ein erfindungsgemäßes Abbaumittel in zumindest einer Abbaukammer der Vorrichtung angeordnet ist und wobei der zumindest eine Schadstoff als Gas und/oder mittels eines gasförmigen Mediums und/oder als Flüssigkeit und/oder mittels eines flüssigen Mediums zwecks Adsorption an dem Adsorptionsmittel durch die Abbaukammer leitbar ist. Es liegt im Rahmen der Erfindung, dass ein schadstoffhaltiges Stoffgemisch bzw. ein Stoffgemisch mit dem zumindest einen abzubauenden Schadstoff durch die Abbaukammer geleitet wird.

Eine empfohlene Ausführungsform des erfindungsgemäßen Verfahrens ist dadurch gekennzeichnet, dass der zumindest eine Schadstoff bzw. das Stoffgemisch mit dem zumindest einen Schadstoff diskontinuierlich über das Adsorptionsmittel bzw. durch die Abbaukammer geleitet wird. Zweckmäßigerweise wird der zumindest eine Schadstoff bzw. das schadstoffhaltige Stoffgemisch in einer Betriebsphase über das Adsorptionsmittel bzw. durch die Abbaukammer geleitet, in welcher Betriebsphase die Adsorption des zumindest einen Schadstoffes an dem Adsorptionsmittel stattfindet. Zweckmäßigerweise wird in einer anschließenden Ruhephase kein Schadstoff bzw. kein schadstoffhaltiges Stoffgemisch über das Adsorptionsmittel bzw. durch die Abbaukammer geleitet und während dieser Ruhephase findet vorzugsweise lediglich der Abbau des zumindest einen Schadstoffes mittels der Mikroorganismen an dem Adsorptionsmittel bzw. in der Abbaukammer statt. So kann beispielsweise mit einer erfindungsgemäßen Reinigungsvorrichtung bzw. bei der Realisierung des erfindungsgemäßen Verfahrens tagsüber die Betriebsphase durchgeführt werden und nachts während der Ruhephase lediglich der Abbau des Schadstoffes mittels der Mikroorganismen erfolgen. Insoweit findet gemäß dieser sehr bevorzugten Ausführungsform gleichsam ein Wechselspiel zwischen Adsorption und Abbau des zumindest einen Schadstoffes in der Betriebsphase und dem ausschließlichen Abbau des zumindest einen Schadstoffes während der Ruhephase statt.

Der Erfindung liegt die Erkenntnis zugrunde, dass mit dem erfindungsgemäßen Verfahren, mit dem erfindungsgemäßen Abbaumittel und mit der erfindungsgemäßen Reinigungsvorrichtung eine sehr effektive und funktionssichere Behandlung und Beseitigung von Schadstoffen aus Stoffgemischen - wie insbesondere aus Abluft und Abwasser - möglich ist. Der Erfindung liegt vor allem die Erkenntnis zugrunde, dass das erfindungsgemäß eingesetzte Adsorptionsmittel aufgrund seiner großen Oberfläche bzw. aufgrund seines großen Porenvolumens eine große Anzahl von Mikroorganismen effektiv immobilisieren kann und dass gleichzeitig die hohen adsorptiven Eigenschaften des Adsorptionsmittels für die Adsorption der Schadstoffe erhalten bleiben. Da das erfindungsgemäß verwendete Adsorptionsmittel bevorzugt hydrophile und hydrophobe Eigenschaften aufweist, stellt es eine ideale Umgebung für die Adsorption und das Wachstum der Mikroorganismen dar. Die hohe Adsorptionsfähigkeit des erfindungsgemäß verwendeten Adsorptionsmittels stellt einerseits eine direkte effektive und funktionssichere Adsorption der Schadstoffe aus Stoffgemischen - wie Abluft oder Abwasser - sicher und gewährleistet anschließend eine wirksame Metabolisierung der Schadstoffe durch die Mikroorganismen. Insoweit wird im Rahmen der Erfindung eine optimale Kombination von Adsorption einerseits und Abbau durch die Mikroorganismen andererseits erzielt.

Von besonderem Vorteil ist im Rahmen der Erfindung, dass nur sehr kurze Anfahrtszeiten beim erfindungsgemäßen Verfahren durch den vorteilhaft schnellen Bewuchs des Adsorptionsmittels mit hochaktiven Bakterien notwendig sind. - Aufgrund der Effektivität des erfindungsgemäßen Verfahrens bzw. der erfindungsgemäßen Reinigungsvorrichtung sind im Vergleich zu aus dem Stand der Technik bekannten Biofiltern insbesondere 2 bis. 4-mal kleinere Filterbettvolumina erforderlich und die Erfindung zeichnet sich im Vergleich zu den aus der Praxis bekannten Maßnahmen auch durch entsprechend kürzere Verweilzeiten aus. Hervorzuheben ist weiterhin, dass das polymere nicht abbaubare Material des erfindungsgemäß eingesetzten Adsorptionsmittels eine lange Lebensdauer des erfindungsgemäßen Abbaumittels bzw. der erfindungsgemäßen Reinigungsvorrichtung im Vergleich zu den aus dem Stand der Technik bekannten Maßnahmen sicherstellt. - Mit dem erfindungsgemäßen Verfahren lassen sich gasförmige Schadstoffe und vor allem unangenehme bzw. unerwünschte Gerüche optimal entfernen bzw. binden.

In der Regel erfolgt der biologische Abbau von schwer abbaubaren Schadstoffen wegen der Inhibierung und des langsamen Wachstums der Mikroorganismen problematisch. Das erfindungsgemäße Verfahren verbessert diesen Abbau von schwer abbaubaren Schadstoffen beachtlich. Die erforderlichen Mikroorganismen können effektiv und funktionssicher auf den adsorbierenden Oberflächen des erfindungsgemäß eingesetzten Adsorptionsmittels immobilisiert werden und es erfolgt in vorteilhafter Weise ein sofortiger Bewuchs dieses Trägermaterials, beispielsweise innerhalb von 60 bis 90 Minuten. Aufgrund dieser optimalen Aufnahme der notwendigen Mikroorganismen stehen verhältnismäßig viele Organismen zur Verfügung und dies gewährleistet einen hohen Wirkungsgrad. Es werden optimale Raum-Zeit-Ausbeuten erzielt und die Erfindung zeichnet sich nichtsdestoweniger durch Einfachheit und geringen Aufwand auf.

Im Rahmen des erfindungsgemäßen Verfahrens können verschiedene Arten von flüssigen Stoffgemischen bzw. von Abwässern - wie beispielsweise kommunale Abwässer und Industrieabwässer - einfach und problemlos gereinigt werden. Auch eine Abluftreinigung ist im Rahmen des erfindungsgemäßen Verfahrens effektiv und mit geringem Aufwand möglich.

## Patentansprüche

1. Verfahren zum Abbau zumindest eines kohlenstoffhaltigen Schadstoffes, insbesondere zumindest eines organischen kohlenstoffhaltigen Schadstoffes, wobei der Schadstoff an zumindest einem Adsorptionsmittel adsorbiert wird, wobei das Adsorptionsmittel zumindest einen Kautschuk in feinverteilter bzw. feinzerkleinerter Form und zumindest einen damit gemischten feinteiligen bzw. pulverförmigen Füllstoff aufweist und wobei in bzw. an dem Adsorptionsmittel Mikroorganismen aufgenommen sind bzw. werden, mit denen die Schadstoffe abgebaut werden bzw. von denen die Schadstoffe aufgenommen werden.

2. Verfahren nach Anspruch 1, wobei als organischer kohlenstoffhaltiger Schadstoff zumindest ein Schadstoff aus der Gruppe "aliphatischer Kohlenwasserstoff, aromatischer Kohlenwasserstoff, sauerstoffhaltiger Kohlenwasserstoff, schwefelhaltiger Kohlenwasserstoff, stickstoffhaltiger Kohlenwasserstoff, halogenhaltiger Kohlenwasserstoff' abgebaut wird.

3. Verfahren nach einem der Ansprüche 1 oder 2, wobei als organischer kohlenstoffhaltiger Schadstoff zumindest ein Schadstoff aus der Gruppe "Alkan, Alken, Alkohol, Keton, Phenol, Amin, Styrol, Dioxin, Furan, Mercaptan, Naphthalin" abgebaut wird.

4. Verfahren nach einem der Ansprüche 1 bis 3, wobei die Schadstoffe in gasförmiger und/oder flüssiger Form in Kontakt mit dem Adsorptionsmittel gebracht werden.

5. Verfahren nach einem der Ansprüche 1 bis 4, wobei für das Adsorptionsmittel zumindest ein Kautschuk aus der Gruppe "Emulsions-Styrol-Butadien-Kautschuk (ESBR), Styrol-Butadien-Kautschuk (SBR), Naturkautschuk" eingesetzt wird.

6. Verfahren nach einem der Ansprüche 1 bis 5, wobei als Füllstoff zumindest ein Ruß aus der Gruppe "Furnaceruß, Gasruß, Flammruß" eingesetzt wird.

7. Verfahren nach einem der Ansprüche 1 bis 6, wobei das Adsorptionsmittel in fester Form, vorzugsweise in Form von Pulver, Pellets und/oder Granulat eingesetzt wird.

8. Verfahren nach einem der Ansprüche 1 bis 7, wobei der Abbau der adsorbierten Schadstoffe durch die Mikroorganismen bei einer Temperatur von 10°C bis 80°C, vorzugsweise von 10°C bis 70°C, bevorzugt von 10°C bis 45°C und besonders bevorzugt von 10°C bis 35°C durchgeführt wird.

9. Verfahren nach einem der Ansprüche 1 bis 8, wobei heterotrophe, insbesondere chemo-organo-heterotrophe Mikroorganismen bzw. Bakterien für den Abbau der Schadstoffe eingesetzt werden.

10. Verfahren nach einem der Ansprüche 1 bis 9, wobei zumindest eine Mikroorganismenart aus der Gruppe "Pseudomonas sp, Xanthomonas sp, Pseudomonas acidovorans CA28, Pseudomonas sp B13, Pseudomonas putida US2, Rhodococcus spp, Alcaligenes sp A 7-2, Pseudomonas sp NRRL B-12228, Streptomycetes spp, Xanthobacter autotrophicus, Candida parapsilosis, Flavobacterium sp, Arthrobacter sp ATCC 33790, Phanerochaete chrysosporium, Fusarium flocciferum, Methanogenic consortium, Fusarium flocciferum, Pseudomonas putida P8, Cryptococcus elinovii, Pimelobacter sp, Alcaligenes denitrificans, Paracoccus nitrificants", für den Abbau der Schadstoffe eingesetzt wird.

11. Verfahren nach einem der Ansprüche 1 bis 10, wobei eine Mischung von Mikroorganismen bzw. Mikroorganismenarten eingesetzt wird, insbesondere für den Abbau einer Mischung von Schadstoffen eingesetzt wird.

12. Abbaumittel zum Abbau zumindest eines kohlenstoffhaltigen Schadstoffes bzw. zumindest eines organischen kohlenstoffhaltigen Schadstoffes - insbesondere zur Durchführung eines Verfahrens nach einem der Ansprüche 1 bis 11 -, wobei zumindest ein Adsorptionsmittel zur Adsorption des Schadstoffes vorhanden ist, wobei das Adsorptionsmittel eine Mischung aus zumindest einem Kautschuk - insbesondere in feinverteilter bzw. feinzerkleinerter Form - und aus zumindest einem Füllstoff - insbesondere in feinteiliger bzw. pulverförmiger Form - aufweist und wobei in bzw. an dem Adsorptionsmittel Mikroorganismen aufgenommen sind, mit denen die von dem Adsorptionsmittel adsorbierten Schadstoffe abbaubar sind.

13. Abbaumittel nach Anspruch 12, wobei das Adsorptionsmittel Poren in Form von Mikroporen (d < 2nm), Mesoporen (d = 2 - 50nm) und Makroporen (d > 50nm) aufweist und wobei der Porenanteil der Mikroporen dabei 0 % bis 10 %, bevorzugt 3 % bis 7 % und wobei der Porenanteil der Mesoporen 70 % bis 100 %, bevorzugt 75 % bis 95 %, sehr bevorzugt 80 % bis 90 % beträgt und wobei der Porenanteil der Makroporen 0 % bis 20 %, bevorzugt 5 % bis 15 % beträgt.

14. Abbaumittel nach einem der Ansprüche 12 oder 13, wobei der Anteil des Füllstoffes 40 bis 95 Gew.-%, bevorzugt 60 bis 95 Gew.-% beträgt.

15. Reinigungsvorrichtung für den Abbau zumindest eines kohlenstoffhaltigen Schadstoffes bzw. zumindest eines organischen kohlenstoffhaltigen Schadstoffes - insbesondere zur Durchführung eines Verfahrens nach den Ansprüchen 1 bis 11 -, wobei ein Abbaumittel nach einem der Ansprüche 12 bis 14 in zumindest einer Abbaukammer der Vorrichtung angeordnet ist und wobei der zumindest eine Schadstoff als Gas und/oder mittels eines gasförmigen Mediums und/oder als Flüssigkeit und/oder mittels eines flüssigen Mediums zwecks Adsorption an dem Adsorptionsmittel durch die Abbaukammer führbar ist.

## Geänderte Patentansprüche

### Geänderte Patentansprüche gemäss Regel 137(2) EPÜ.

1. Verfahren zum Abbau zumindest eines kohlenstoffhaltigen Schadstoffes, insbesondere zumindest eines organischen kohlenstoffhaltigen Schadstoffes, wobei der Schadstoff an zumindest einem Adsorptionsmittel adsorbiert wird, wobei das Adsorptionsmittel zumindest einen Kautschuk in feinverteilter bzw. feinzerkleinerter Form und zumindest einen damit gemischten feinteiligen bzw. pulverförmigen Füllstoff aufweist, wobei als Kautschuk ein Kautschuk aus der Gruppe "Emulsions-Styrol-Butadien-Kautschuk (ESBR), Styrol-Butadien-Kautschuk (SBR), Naturkautschuk" eingesetzt wird und wobei in bzw. an dem Adsorptionsmittel Mikroorganismen aufgenommen sind bzw. werden, mit denen die Schadstoffe abgebaut werden bzw. von denen die Schadstoffe aufgenommen werden.

2. Verfahren nach Anspruch 1, wobei als organischer kohlenstoffhaltiger Schadstoff zumindest ein Schadstoff aus der Gruppe "aliphatischer Kohlenwasserstoff, aromatischer Kohlenwasserstoff, sauerstoffhaltiger Kohlenwasserstoff, schwefelhaltiger Kohlenwasserstoff, stickstoffhaltiger Kohlenwasserstoff, halogenhaltiger Kohlenwasserstoff' abgebaut wird.

3. Verfahren nach einem der Ansprüche 1 oder 2, wobei als organischer kohlenstoffhaltiger Schadstoff zumindest ein Schadstoff aus der Gruppe "Alkan, Alken, Alkohol, Keton, Phenol, Amin, Styrol, Dioxin, Furan, Mercaptan, Naphthalin" abgebaut wird.

4. Verfahren nach einem der Ansprüche 1 bis 3, wobei die Schadstoffe in gasförmiger und/oder flüssiger Form in Kontakt mit dem Adsorptionsmittel gebracht werden.

5. Verfahren nach einem der Ansprüche 1 bis 4, wobei als Füllstoff zumindest ein Ruß aus der Gruppe "Furnaceruß, Gasruß, Flammruß" eingesetzt wird.

6. Verfahren nach einem der Ansprüche 1 bis 5, wobei das Adsorptionsmittel in fester Form, vorzugsweise in Form von Pulver, Pellets und/oder Granulat eingesetzt wird.

7. Verfahren nach einem der Ansprüche 1 bis 6, wobei der Abbau der adsorbierten Schadstoffe durch die Mikroorganismen bei einer Temperatur von 10°C bis 80°C, vorzugsweise von 10°C bis 70°C, bevorzugt von 10°C bis 45°C und besonders bevorzugt von 10°C bis 35°C durchgeführt wird.

8. Verfahren nach einem der Ansprüche 1 bis 7, wobei heterotrophe, insbesondere chemo-organo-heterotrophe Mikroorganismen bzw. Bakterien für den Abbau der Schadstoffe eingesetzt werden.

9. Verfahren nach einem der Ansprüche 1 bis 8, wobei zumindest eine Mikroorganismenart aus der Gruppe "Pseudomonas sp, Xanthomonas sp, Pseudomonas acidovorans CA28, Pseudomonas sp B13, Pseudomonas putida US2, Rhodococcus spp, Alcaligenes sp A 7-2, Pseudomonas sp NRRL B-12228, Streptomycetes spp, Xanthobacter autotrophicus, Candida parapsilosis, Flavobacterium sp, Arthrobacter sp ATCC 33790, Phanerochaete chrysosporium, Fusarium flocciferum, Methanogenic consortium, Fusarium flocciferum, Pseudomonas putida P8, Cryptococcus elinovii, Pimelobacter sp, Alcaligenes denitrificans, Paracoccus nitrificants", für den Abbau der Schadstoffe eingesetzt wird.

10. Verfahren nach einem der Ansprüche 1 bis 9, wobei eine Mischung von Mikroorganismen bzw. Mikroorganismenarten eingesetzt wird, insbesondere für den Abbau einer Mischung von Schadstoffen eingesetzt wird.

11. Abbaumittel zum Abbau zumindest eines kohlenstoffhaltigen Schadstoffes bzw. zumindest eines organischen kohlenstoffhaltigen Schadstoffes zur Durchführung eines Verfahrens nach einem der Ansprüche 1 bis 10, wobei zumindest ein Adsorptionsmittel zur Adsorption des Schadstoffes vorhanden ist, wobei das Adsorptionsmittel eine Mischung aus zumindest einem Kautschuk - insbesondere in feinverteilter bzw. feinzerkleinerter Form - und aus zumindest einem Füllstoff - insbesondere in feinteiliger bzw. pulverförmiger Form - aufweist, wobei der Kautschuk ein Kautschuk aus der Gruppe "Emulsions-Styrol-Butadien-Kautschuk (ESBR), Styrol-Butadien-Kautschuk (SBR), Naturkautschuk" ist und wobei in bzw. an dem Adsorptionsmittel Mikroorganismen aufgenommen sind, mit denen die von dem Adsorptionsmittel adsorbierten Schadstoffe abbaubar sind.

12. Abbaumittel nach Anspruch 11, wobei das Adsorptionsmittel Poren in Form von Mikroporen (d < 2nm), Mesoporen (d = 2 - 50nm) und Makroporen (d > 50nm) aufweist und wobei der Porenanteil der Mikroporen dabei 0 % bis 10 %, bevorzugt 3 % bis 7 % und wobei der Porenanteil der Mesoporen 70 % bis 100 %, bevorzugt 75 % bis 95 %, sehr bevorzugt 80 % bis 90 % beträgt und wobei der Porenanteil der Makroporen 0 % bis 20 %, bevorzugt 5 % bis 15 % beträgt.

13. Abbaumittel nach einem der Ansprüche 11 oder 12, wobei der Anteil des Füllstoffes 40 bis 95 Gew.-%, bevorzugt 60 bis 95 Gew.-% beträgt.

14. Reinigungsvorrichtung für den Abbau zumindest eines kohlenstoffhaltigen Schadstoffes bzw. zumindest eines organischen kohlenstoffhaltigen Schadstoffes zur Durchführung eines Verfahrens nach den Ansprüchen 1 bis 10, wobei ein Abbaumittel nach einem der Ansprüche 11 bis 13 in zumindest einer Abbaukammer der Vorrichtung angeordnet ist und wobei der zumindest eine Schadstoff als Gas und/oder mittels eines gasförmigen Mediums und/oder als Flüssigkeit und/oder mittels eines flüssigen Mediums zwecks Adsorption an dem Adsorptionsmittel durch die Abbaukammer führbar ist.
